(19) Europäisches Patentamt
European Patent Office
Office européen des brevets

(11) **EP 3 464 678 B1**

(12) **FASCICULE DE BREVET EUROPEEN**

(45) Date de publication et mention de la délivrance du brevet:
**25.03.2020 Bulletin 2020/13**

(21) Numéro de dépôt: **17732507.3**

(22) Date de dépôt: **24.05.2017**

(51) Int Cl.:
*C23C 18/06* (2006.01)          *C03C 17/04* (2006.01)
*C09D 183/02* (2006.01)      *C23C 18/12* (2006.01)
*C03C 17/00* (2006.01)

(86) Numéro de dépôt international:
**PCT/FR2017/051299**

(87) Numéro de publication internationale:
**WO 2017/203180 (30.11.2017 Gazette 2017/48)**

(54) **PROCEDE DE FABRICATION D'UNE COUCHE OU D'UN MOTIF DE REVETEMENT DE LA FACE INTERNE D'UN RECIPIENT ET RECIPIENT OBTENU AVEC UN TEL PROCEDE**

VERFAHREN ZUR HERSTELLUNG EINER SCHICHT ODER EINES MUSTERS ZUR BESCHICHTUNG DER INNENFLÄCHE EINES BEHÄLTERS UND DURCH EIN VERFAHREN DES BESAGTEN TYPS ERHALTENER BEHÄLTER

METHOD FOR THE PRODUCTION OF A LAYER OR A PATTERN FOR COATING THE INNER SURFACE OF A RECEPTACLE, AND RECEPTACLE OBTAINED BY A METHOD OF SAID TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2016 FR 1654706**

(43) Date de publication de la demande:
**10.04.2019 Bulletin 2019/15**

(73) Titulaire: **Glass Surface Technology**
**75015 Paris (FR)**

(72) Inventeurs:
• **WAGNER, Christophe**
**87320 Bussiere-Poitevine (FR)**

• **MARSAL, Alexis**
**87000 Limoges (FR)**

(74) Mandataire: **Benech, Frédéric**
**Cabinet Benech**
**15, rue d'Astorg**
**75008 Paris (FR)**

(56) Documents cités:
EP-A1- 1 052 230          FR-A1- 2 443 484
FR-A1- 2 921 931          FR-A1- 2 935 594
FR-A1- 2 939 615          US-A1- 2013 035 400
US-A1- 2014 272 155

**Description**

La présente invention concerne un procédé de fabrication d'une couche ou d'un motif de revêtement de la face interne d'un récipient.

Elle concerne également un récipient obtenu avec un tel procédé.

L'invention trouve une application particulièrement importante bien que non exclusive dans le domaine de la fabrication de flacons en verre destinés à recevoir et conserver des produits pharmaceutiques ou cosmétiques et plus particulièrement dans le domaine de la coloration et/ou de la décoration de flacons pour la parfumerie.

On connait déjà l'utilisation de flacon de couleur obtenu par coloration du verre dans la masse. On connait également l'apposition d'une couche de revêtement ou de motif sur la face externe des flacons.

De telles solutions présentent des inconvénients de coût de fabrication notamment, le verre teinté étant plus couteux et/ou plus difficile à façonner. Un revêtement externe est quant à lui également difficile à fabriquer et surtout plus fragile car susceptible d'être abimé ou arraché, par exemple par frottement lors de sa manipulation.

Le domaine de la parfumerie nécessite par ailleurs la conservation de produits contenant une proportion importante de solvant alcoolique, par exemple une proportion supérieure à 10% en volume, par exemple supérieure à 20%, par exemple supérieure à 60% dans les conditions normales.

Or de tels produits sont combinés avec des dérivés de plantes, des essences concentrées et/ou d'autres produits à Ph élevés, ce qui les rend agressifs et génèrent des risques de contamination accrue à terme du produit conservé par interaction avec les parois du flacon.

Le stockage de parfum en flacon de verre nécessite en effet la conservation de produits de façon neutre pendant un temps assez long (par exemple plusieurs mois, voire années).

Classiquement on entend par verre neutre un verre qui effectue dans le temps, un relargage d'ions, par exemple d'ions sodium ou autres ions alcalins et/ou alcalino-terreux en très faible quantité dans le liquide ou produit qui est à l'intérieur du récipient.

Par très faible quantité on entend un rapport entre masse totale des éléments extractibles et masse du liquide contenu inférieur à 6 ppm.

Le verre sodo-calcique n'est par exemple pas neutre au sens de la pharmacopée.

On sait ainsi que lorsqu'un flacon en verre est fabriqué il est nécessairement porté à des températures importantes qui engendrent notamment une migration des alcali (dans le cas d'un verre au silicate) qui remontent à la surface du verre et/ou à sa proximité immédiate, et ce de façon suffisante pour être exposés ultérieurement au contenu du récipient.

Or, les quantités de ces substances, d'alcali ou autres, bien qu'en général très petites, sont gênantes dans le cas de flacons destinés à contenir des produits cosmétiques ou des parfums qui vont rentrer en contact directement avec la peau de l'utilisateur.

La présente invention vise à fournir un procédé de fabrication répondant mieux que ceux antérieurement connus aux exigences de la pratique, notamment en ce qu'elle permet de pallier les inconvénients de l'art antérieur, et notamment de minimiser les interactions contenants/contenus tout en autorisant un marquage et une coloration des parois du flacon esthétiques, peu coûteux et peu sujets à détérioration.

Pour ce faire elle part de l'idée de procéder à un marquage interne de la paroi du récipient, par exemple par coloration, celle-ci étant alors protégée des chocs et éraflures extérieures permettant ainsi de satisfaire les hautes exigences esthétiques du domaine.

Mais, ce faisant, on introduit directement dans le flacon des éléments supplémentaires potentiellement nuisibles. En effet, encore faut-il que le revêtement ne soit pas susceptible de se dégrader de façon encore plus gênante que le verre.

Or, la composition particulière du produit contenu, et la nature chimique de celui-ci (composé alcoolique en majorité combiné avec des essences concentrées etc...), rend particulièrement difficile la bonne tenue de la couche et le respect d'un faible taux de relargage.

On connaît (WO 2010/112792 ; FR 2 935 594) des procédés de recouvrement d'au moins une fraction d'une face interne d'un récipient par un matériau vitreux élaboré selon un procédé connu de l'homme du métier sous la dénomination Sol-gel (Diminutif de Solution - Gel).

Le matériau vitreux, à base de silice, est obtenu sans fusion, par polymérisation d'au moins un précurseur moléculaire.

Il comprend une étape de synthèse effectuée à partir d'alcoolates de formule $M(OR)_n$, où M est un métal par exemple du zirconium, et R un groupement organique alkyle $C_nH_{2n+1}$ dissout dans un solvant usuel, puis une étape plus ou moins longue de gélification avec évaporation du solvant jusqu'à solidification complète.

De tels procédés présentent des inconvénients.

En effet, ils laissent une acidité résiduelle sur le support lors de l'utilisation des acides classiquement choisis comme l'acide acétique ou l'acide chlorhydrique, qui peut modifier la perception olfactive des parfums.

Mais de plus et surtout ces procédés n'ont pas identifié le problème de la barrière et de ce fait n'ont pas recherché ni ne permettent pas d'augmenter la résistance hydrolytique de façon suffisante, car générant un revêtement trop poreux et/ou laissant des zones mal protégées (trous) sur la partie de surface concernée, où le dépôt est réalisé.

En d'autres termes avec de tels procédés, l'efficacité de la fonction de barrière aux relargages et aux phénomènes d'exsudations, se détériore dans le temps avec des cinétiques trop rapides pour les contraintes de durée de conservation notamment pour les applications en parfumerie.

Ce type de procédés est en général également spécifiquement adapté à un type de matériau constitutif du récipient.

Or ceci est particulièrement problématique lorsque l'on souhaite fonctionnaliser la couche, c'est-à-dire lui adjoindre des éléments chimiques permettant l'expression d'une fonction particulière telle que : la coloration de la couche, la résistance aux rayonnements électromagnétiques, des fonctions médicales notamment antibiotiques, des effets visuels particuliers, ou tout autre fonction.

Ces éléments sont alors soit relargués, soit n'assurent pas complètement leur fonction et dégradent la tenue de la couche au détriment de sa capacité barrière.

En résumé on observe notamment que ces procédés, utilisant des acides forts tels que l'acide chlorhydrique (HCl), qui sont naturellement privilégiés par l'homme du métier pour la préparation de solutions réactives et l'augmentation de la cinétique de la réaction, d'une part présentent l'inconvénient de laisser passer une quantité résiduelle d'acide perturbatrice à terme de la qualité et de l'odeur du parfum, et d'autre part n'assurent pas de manière optimale une barrière vis à vis de la paroi du récipient entraînant des relargages dans le produit contenu.

La présente invention permet de pallier ces inconvénients, notamment en ce qu'elle permet de traiter tous les types de flacons avec la même formulation, indépendamment des fournisseurs de ceux-ci et ce en engendrant moins de casse ou d'endommagement des récipients que dans l'art antérieur, en ce qu'elle améliore de manière importante les résistances hydrolytiques en générant un véritable effet barrière et une bonne neutralité, c'est-à-dire une imperméabilité aux produits extractibles de la paroi du récipient, en ce qu'elle optimise l'accroche de la couche à la paroi interne du récipient, en ce qu'elle permet de fonctionnaliser la couche sans le faire au détriment des résistances hydrolytiques, mécaniques, thermiques et chimiques de la couche et en ce qu'elle permet de fonctionner en milieu confiné avec par exemple application par un pulvérisateur.

L'invention permet également d'obtenir des couches figées d'une épaisseur plus importante, plus uniforme et de bonnes cinétiques de réaction sur le plan industriel pour des températures de traitement en général plus faibles que dans l'art antérieur.

Avec l'invention, le rendu esthétique final de la couche est amélioré en réduisant de manière significative les craquelures et bosselures de la couche et ce de manière durable dans le temps, ce qui est crucial dans le domaine du luxe et de la parfumerie.

En résumé, l'invention permet l'obtention d'une couche assurant une barrière neutre, imperméable aux rayonnements et aux espèces chimiques et ce dans les deux sens de traversée de la couche.

La présente invention a donc notamment pour objet de mettre en œuvre ces principes avec les avantages ci-dessus mentionnés.

Dans ce but, elle propose notamment un procédé de fabrication d'une couche neutre et barrière de matrice minérale de revêtement de la face interne d'un récipient propre à contenir des produits biocompatibles avec l'homme et/ou l'animal, dans lequel

- on forme une solution contenant au moins un solvant, de l'eau, au moins un précurseur moléculaire complexant de la famille des alkoxysilanes, au moins un surfactant, au moins un pigment et/ou colorant et de l'acide citrique comme catalyseur,
- on applique la solution ainsi complexée de façon uniforme sur au moins une partie de la face interne du récipient, la solution étant en cours d'hydrolyse et condensation, et
- on sèche la solution ainsi appliquée à une température déterminée de séchage pour former sur ladite face interne ladite couche barrière opaque, translucide et/ou formant un motif déterminé, avant évacuation, stockage éventuel puis remplissage dudit récipient par le produit.

En particulier, il n'y a donc pas de traitement ultérieur nécessaire pour la bonne conservation du produit.

Par solvant on entend une substance différente de l'eau, qui a la propriété de dissoudre, de diluer ou d'extraire d'autres substances sans les modifier chimiquement et sans lui-même se modifier.

Par fabrication d'une couche barrière de revêtement de la face interne d'un récipient, on entend la fabrication d'une solution de recouvrement formant, après gélification puis solidification, une couche de matériau protecteur, ainsi que le recouvrement proprement dit c'est-à-dire l'apposition superficielle d'une telle solution sur la surface d'un objet formé d'un autre matériau, pour créer après gélification et durcissement cette couche de protection de façon solidaire et durable (c'est à dire supérieure à plusieurs années).

Plus précisément on observe un meilleur effet barrière lorsque la résistance hydrolytique lors de mesures successives est en moyenne meilleure qu'avec l'art antérieur d'au moins dix pour cent, avantageusement 30 % voire 50 % et jusqu'à 80% (et donc la capacité de relargage qui lui est proportionnelle).

Un tel revêtement modifie les propriétés de surface, physiques et/ou chimiques de cet autre matériau (quand il rentre en contact avec un produit).

Par couche de matrice minérale on entend une couche ne comportant pas de composés organiques, sauf pour ce qui seraient d'éventuels additifs.

Par en cours d'hydrolyse et condensation on entend le fait que la réaction chimique globale n'a pas encore atteint son degré d'avancement final ou maximal.

On sait que le taux d'avancement $\xi_r$ d'une réaction est défini par

$$\xi_r = \frac{\xi}{\xi_{max}}$$

avec $\xi_r \in [0;1]$ et

$\xi$ : degré d'avancement à l'instant donné t
$\xi_{max}$ : degré d'avancement final ou maximal.

On définit par ailleurs l'avancement de la réaction par

$$d\xi = \frac{dn_i}{v_i}$$

avec

$dn_i$ : variation du nombre de moles depuis l'instant initial et
$v_i$: nombre stœchiométrique de la réaction.

En l'espèce, le taux d'avancement doit être à une valeur inférieure à 1 permettant la micro pulvérisation.

De façon alternative, par en cours d'hydrolyse et condensation, on entend également que la solution en cours de gélification est à l'instant t, d'une viscosité permettant une application homogène, par exemple une viscosité dynamique à 20C° comprise entre 1 et 150, par exemple entre 3 et 80, et en particulier inférieure à 50 mPa.s, par exemple inférieure à 20 mPa.s, par exemple inférieure à 10 mPa.s.

L'avancement de la réaction et la viscosité sont en effet liés.

La densité de la couche ainsi que la possibilité pour celle-ci d'être formée d'une seule surface fermée (2 dimensions) sans trous, i.e. de genre O en topologie, accroît encore la résistance au relargage de la surface interne du flacon.

A noter que le surfactant peut être initialement incorporé au pigment et/ou colorant, mais que tant le surfactant que le colorant (ou le pigment) sont incorporés au sol gel, c'est-à-dire dans la masse de ce dernier, et non simplement présents et/ou liés à la surface de celui-ci.

Enfin la dernière étape de séchage à une température déterminée se fait avantageusement immédiatement après l'application de la solution.

Par immédiatement on entend tout de suite ou dans les quelques minutes qui suivent (< à 60 mn).

C'est cette étape de séchage qui forme définitivement la couche barrière dure selon le mode de réalisation de l'invention plus particulièrement décrit ici, et qui sera utilisée telle quelle, après stockage éventuel, pour être rempli par le parfumeur.

Aucune autre étape de procédé tel que chauffage ou traitement chimique n'est donc nécessaire pour le fonctionnement prévu du revêtement en contact avec le produit après cette étape de séchage avant le remplissage.

Avec l'invention il va donc être possible d'effectuer un marquage interne coloré par une couche protectrice de résistance hydrolytique importante, essentiellement sur du verre, mais sans exclure obligatoirement le plastique, et avec d'une part une qualité esthétique augmentée (absence de grain, homogénéité de la couche sans bavure, même pour des épaisseurs importantes) et pour une tenue (c'est à dire un accrochage à la paroi du récipient) optimisée dans le temps.

En dépit du processus constant de gélification/solidification il est également possible de conserver sur le long terme le gel (solution partiellement gélifiée) produit à partir de la solution ci-dessus et de travailler à température ambiante.

Avec l'invention le relargage d'ions par le récipient sur les surfaces recouvertes est considérablement réduit. En d'autres termes, la capacité d'un récipient, dont la face interne est sensiblement entièrement recouverte, de résister au relargage d'éléments est améliorée (meilleur effet barrière).

Un tel résultat est obtenu sans traitement ultérieur et dans des conditions de stockage appropriées, les mesures étant effectuées par exemple par le biais des méthodes de détermination prévues par la norme ISO 4802-2, ou par titrage suivant la norme ISO 4802-1.

Classiquement la résistance hydrolytique est mesurée avant traitement, et après traitement, par détermination de la quantité d'oxyde de sodium et d'autres oxydes alcalins ou alcalino-terreux relargués lors d'un traitement en autoclave à 121°C pendant 60 minutes, les mesures étant par exemple ensuite effectuées de façon connue en elle-même par spectrométrie de flamme.

Avec l'invention, on constate ainsi que des relargages ultérieurs notamment tels que testés de façon standardisée en autoclave ou autre comme décrit ci-dessus, ne permettent donc plus de mesurer des taux de relargages significatifs.

Dans des modes de réalisation avantageux, on a par ailleurs et/ou de plus recours à l'une et/ou à l'autre des dispositions suivantes :

- le récipient étant en verre, la température déterminée de séchage est comprise entre 140°C et 220°C ;
- on sèche la solution ainsi appliquée en augmentant la température à une vitesse comprise entre 1°C.min⁻¹ et 10°C.min⁻¹ jusqu'à la température déterminée de séchage ;
- on sèche le revêtement par mise du flacon directement à la température de séchage (150°C par exemple) pour figer le revêtement ;

- on préchauffe le récipient à une deuxième température inférieure à la température déterminée de séchage avant application de la solution ;
- la deuxième température est comprise entre 70°C et 90°C ;
- le séchage à une température déterminée de séchage comprend une première étape de pré-séchage à une troisième température inférieure à la température de séchage pendant un temps déterminé, suivie, avantageusement immédiatement, par une seconde étape de séchage à la température déterminée.

Cette étape de pré-séchage, par exemple à 25°C pendant une heure, permet d'évacuer de façon certaine la totalité des solvants à basse température (< 30° C). Ceci permet d'éviter dans certains cas, la mise en ébullition brusque desdits solvants par exemple contenus dans le sol gel et/ou les pigments, ce qui risquerait alors d'endommager la couche barrière.

- la troisième température de séchage est comprise entre 20°C et 50°C ;
- le précurseur moléculaire est pris parmi l'orthosilicate de tétraéthyle et le trimethoxymethylsilane ;
- le solvant comprend du butoxyethanol et/ou de l'éthanol ;
- on prend le pigment parmi les oxydes métalliques comprenant du cobalt et du titane, les oxydes métalliques comprenant du cuivre et du chrome, les pigments photochromes et/ou on prend le colorant parmi les familles de composés comprenant seul ou en combinaison, le Pyrisma™, l'iriodin™, les quinacridone, les Phtalocyanine, les Chinophtalon et/ou les composés formés d'une couche d'aluminium et/ou ses oxydes, les micas, ladite couche étant elle-même enrobée d'une couche d'oxyde de silice.

Les micas sont par exemple les muscovites (silicate hydroxyle d'aluminium) qui permettent des effets métalliques.
Le Pyrisma™ et l'iriodin™ sont des marques déposées de la société Merck. Il s'agit de produits en poudre contenant du Mica, du $TiO_2$ (rutile) à savoir de 29 à 48 % dans l'Iriodin™ et de 57 à 67 % dans le Pyrisma™ et du $SnO_2$ (1-25μ) ;

- on ajoute à la solution avant application sur la face interne du récipient, des composés pris parmi les familles comprenant des particules de nano-argent colloïdales et/ou les oxydes de titane et/ou les oxydes de cérium et/ou du noir de carbone et/ou du polydiméthylsiloxane ;
- on forme la solution par mélange du solvant en partie et du ou des précurseurs (pendant par exemple 5 mn et jusqu'à 20 mn), puis on ajoute l'eau acidifiée, puis les pigments (par exemple après 1 mn) et/ou le colorant, on expose le mélange obtenu à une onde mécanique ultrasonore pendant un temps déterminé (par exemple compris entre10 mn et 20 mn, par exemple 15 mn

Avantageusement, on ajoute des tensioactifs mélangés avec le reste du solvant à part (0, 1 g dans 3 ml de solvant en proportion par exemple) dans la solution précédente. Puis on effectue au moins un passage aux ultrasons par exemple pendant 5 mn avant mélange pendant plusieurs heures, par exemple 4 h.
Avantageusement la taille des pigments doit être inférieure à 25 microns, et pour le cas du cérium de taille nanométrique pour bloquer les UV sans changer l'aspect tailles de pigments plus élevées on utilise une vibration sur notre pointe d'application pour permettre d'appliquer ces pigments « lourds » ainsi qu'une préchauffe permettant de fixer instantanément la couche sur la paroi comme ci-après.

- avant application de la solution sur la face interne du récipient on extrait préalablement de ladite face interne les matières extractibles, par traitement en étuve en atmosphère humide contenant des molécules de chlorure de sodium et/ou de gluconate de calcium dissout dans de l'eau dans des proportions n'excédant pas celles permettant une dissolution complète desdites molécules ;
- le surfactant est pris parmi le cetrimonium bromide, les surfactants anioniques, le laurylsulfate de sodium et/ou on ajoute du silicone ;
- le surfactant est pris parmi les polyéthylènes glycol de masse molaire comprise entre 1000 et 2000 $g.mol^{-1}$, le polyéthylène glycol tert-octylphenyl ether (connu sous la dénomination TRITON X-100 de la société Thermo Fischer), le polyethylène glycol, le polyethylene glycol p-(1,1,3,3-tetramethylbutyl)-phenyl ether.

Le silicone, notamment tel que le polydiméthylsiloxane, n'est pas réellement un surfactant mais peut effectivement être un additif pour renforcer la couche.
Le revêtement inorganique selon l'invention permet également de se déposer et de protéger une première couche de revêtement de couleur en matière de verre appliquée sur la surface interne du verre blanc (par fusion de poudre ou de liquide etc... ) et empêcher les pigments de couleur du verre de passer dans le parfum.
L'invention propose également un récipient obtenu par le ou les procédés décrits ci-dessus.
Elle concerne également un récipient dont la face interne est recouverte au moins en partie par une solution gélifiée complexée et séchée contenant au moins un solvant, de l'eau, au moins un précurseur moléculaire complexant de la famille des alkoxysilanes, au moins un surfactant, au moins un pigment et/ou colorant et l'acide citrique comme catalyseur.
Les proportions sont alors avantageusement du type suivant.

Pour 100 ml de mélange de préparation avant les pigments, on introduit de 50 à 64 parts de solvant, dont jusqu'à 50 % d'éthanol et de 50 à 100 % de butoxyéthanol, qu'on mélange avec de 18 à 27 parts de précurseurs, de 18 à 24 ml d'eau acide dont de 16 à 22 ml d'eau et de 1,9 à 2,6 ml d'acide.

Enfin, pour 100 ml de ce mélange, on ajoute de 2,5 à 32 g de pigments ou charges et de 0,01 à 2 g de surfactants.

Dans un mode de réalisation avantageux la solution gélifiée forme un motif de décoration en contraste par rapport à la surface interne attenante.

Avantageusement le récipient est un flacon cosmétique ou de parfum en verre.

Dans un autre mode de réalisation le récipient est en matière plastique transparente.

L'invention sera mieux comprise à la lecture de la description qui suit de modes de réalisation décrits ciaprès à titre d'exemples non limitatifs et en référence aux figures qui l'accompagnent dans lesquelles :

La figure 1 est un organigramme montrant les étapes d'un procédé de fabrication d'une couche de revêtement selon un mode de réalisation de l'invention.
La figure 2 montre en perspective, un récipient selon un mode de réalisation de l'invention.
La figure 3 montre schématiquement en coupe un mode de réalisation d'un dispositif mettant en œuvre le procédé selon un mode de réalisation de l'invention.
Les figures 4A et 4B montrent respectivement au microscope la surface d'une couche sol gel sans surfactant, et la surface d'une couche sol gel avec surfactant selon l'invention.

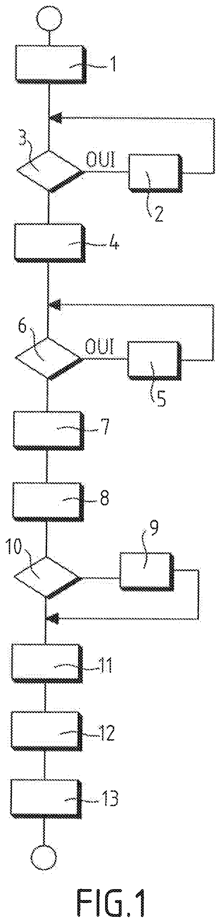

La figure 1 est un organigramme donnant les étapes principales du procédé de fabrication de la couche inorganique (à part les additifs) barrière et fonctionnelle selon le mode de réalisation de l'invention plus particulièrement décrit ici.

Le procédé permet l'accroche importante sur la surface de la face interne et la dispersion des pigments et/ou colorants dans la couche.

Dans le cas de certains pigments la pulvérisation se fait de plus en faisant vibrer l'équipement de pulvérisation, et l'étape de séchage peut inclure un premier traitement de 30 à 50°C qui va permettre d'évaporer les solvants et/ou conservateurs des pigments, par exemple un milieu confiné pour éviter l'ingestion des molécules du solvant par les opérateurs.

Après approvisionnement du flacon en verre, par exemple en verre transparent utilisé traditionnellement pour des flacons de parfum, par exemple de forme parallélépipédique et d'épaisseur moyenne de paroi latérale de 4 mm et de paroi de fond de 10 mm, on effectue la préparation de la solution SOL-GEL selon le mode suivant.

Dans un réservoir de préparation parfaitement propre (rincé avec solvant et séché au préalable), et après détermination des proportions qui vont dépendre du résultat qu'on souhaite obtenir et qui seront encore précisés ci-après, on ajoute un ou plusieurs précurseurs moléculaires de la famille des alkoxysilanes (étape 1) puis un ou plusieurs solvants (étape 2) selon les résultats du test 3 de choix d'éventuel (s) solvant(s) supplémentaire(s), puis l'eau acidulée (étape 4) puis un ou plusieurs pigments et/ou colorants (étape 5) selon les résultats du test 6 de choix d'éventuels colorants supplémentaires, une étape 7 de brassage par ultrasons, puis un ajout de tensioactif dans solvant (étape 8), puis au moins un brassage par ultrasons (étape 9) selon résultat du test 10 sur le nombre d'agitations, puis le mélange proprement dit (étape 11) par agitateur par exemple pendant 4 h. Un ou plusieurs surfactants selon les résultats du test 7 de choix d'éventuels surfactants supplémentaires peuvent également être ajoutés à l'étape 6.

Avantageusement les pigments solides sont donc passés aux ultrasons avec le solvant (par exemple du butoxyethanol) et/ou les surfactants lorsqu'ils sont en petite quantité (moins de 1g), mais avant l'ajout du précurseur moléculaire, par exemple de l'orthosilicate de tétraéthyle (TEOS). Cela permet d'améliorer la dispersion des pigments et surfactant(s) dans la masse du gel. De même la préparation complète contenant des pigments solides est passée aux ultrasons en alterné avec des étapes de mélange pour favoriser la dispersion sans former une pâte en cas d'utilisation d'ultrasons prolongée.

Rappelons que l'ensemble des différents ajouts s'effectue avec mélange par exemple par agitateur magnétique.

Dans le mode décrit en référence à la figure 1, le catalyseur (acide) est ajouté dans le mélange ainsi obtenu à l'étape 4 ce qui favorise plus particulièrement l'hydrolyse et la condensation de la solution SOL-GEL.

Avantageusement on préchauffe le flacon par exemple parallèlement à la préparation de la solution effectuée aux étapes 1 à 11.

Puis on procède à l'application (étape 12) de la solution ainsi complexée sur la face interne en totalité ou selon le motif choisi avant séchage et évacuation (étape 13).

La seule étape suivante sera, selon le mode de réalisation de l'invention plus particulièrement décrit, le remplissage des flacons pour leur conditionnement pour commercialisation.

Autrement dit plus aucun autre traitement chimique ou calorique n'est ensuite appliqué au flacon avant son remplissage.

Il n'y a donc pas besoin de traitement thermique pour que le revêtement selon l'invention remplisse son rôle.

Par contre, une mise en température pour rajouter un autre décor qui n'aurait pas été réalisé avant est possible pour le revêtement, s'il ne dépasse pas la température de tenue du sol gel utilisé dans le procédé.

Selon les modes de réalisation de l'invention plus particulièrement décrits, les proportions pour 100% en volume, par exemple pour 100 ml de la solution propre à être appliquée sont, comme on l'a vu et par exemple comprises dans les fourchettes suivantes :

eau : 16 à 22 ml
acide : 1,9 à 2,6 ml
solvant(s) : 47 à 70 parts
précurseur(s): 12 à 30 parts
Auquel s'ajoute en poids pour ces 100 ml surfactant(s): 0 à 2 g
pigment(s) ou colorant(s): 2,5 g à 32 g

Les températures de séchage étant comprises entre 140°C et 220°C avec une montée en température par palier (par exemple deux paliers dont le premier par exemple compris compris entre 30°C et 50°C) et/ou progressivement par exemple à une vitesse comprise entre 2°C/mm et 15°C/mm, par exemple 10°C/mm.

Conjointement ou alternativement il est prévu un préchauffage éventuellement du flacon (sans solution) entre 50°C et 100°C par exemple entre 70°C et 90°C, par exemple à 80°C.

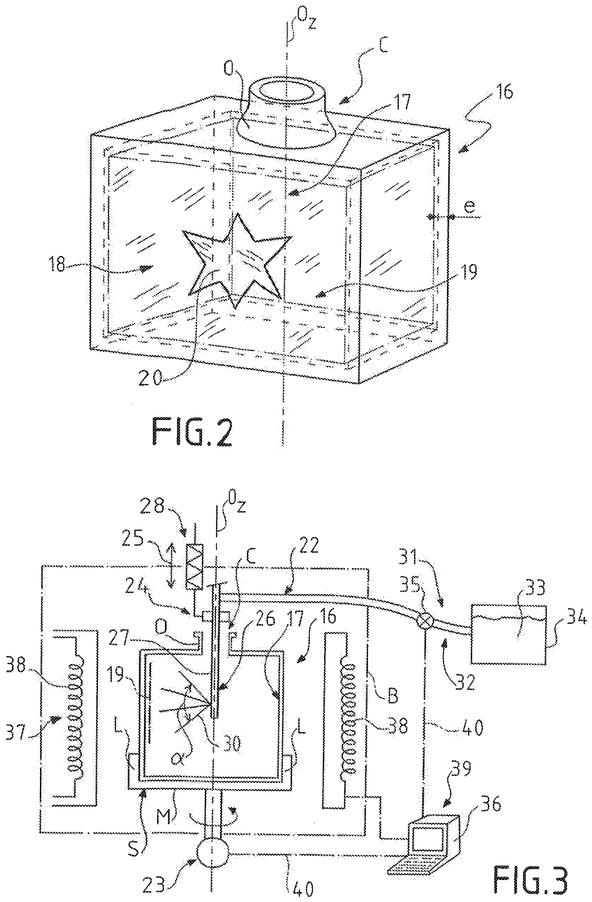

On a représenté sur la figure 2 un flacon 16 de parfum en perspective, comprenant sur la face interne 17 de sa paroi 18 d'épaisseur e par exemple de quelques nanomètres ou de quelques microns avec les gros pigments, un revêtement 19 de couleur (contrastée) et comprenant de plus un motif de décoration 20 en étoile (pigment), tous les deux apposés successivement avec deux solutions successives différentes selon l'invention.

L'application de la solution se fait avantageusement par pulvérisation comme cela va être plus particulièrement décrit en référence à la figure 3.

Suivant les pigments, différents surfactants et dispersants sont également ajoutés pour améliorer le dépôt et la dispersion des pigments.

De manière générale des pigments de taille inférieure à 10 microns conviennent mieux au mélange et à la dispersion. S'ils sont trop gros ils ont tendance à entrainer les pigments vers le fond du flacon après pulvérisation. Ce phénomène peut être en partie compensé en préchauffant le flacon avant dépôt, ce qui le fige à l'application.

De même, des pigments hydrophobes sont mieux dispersés et tenus par la matrice SOL GEL.

Parmi les pigments utilisés, on retient par exemple :

- Pigments céramiques et minéraux, pigments à effets spéciaux : Ils permettent une bonne résistance chimique et un procédé de pulvérisation non perturbé.
- Colorants à effets spéciaux : En particulier ceux de la société Merck comme le Pyrisma T81-23 et l'Iriodin 111 (< 15 microns) et 6123.
- Colorants organiques de petite taille à fort pouvoir colorant (transparance) : Ces colorants sont choisis car faisant partie de la liste de pigments autorisés en cosmétique, avec un fort pouvoir colorant (important car le film obtenu avec l'invention est fin (< 50 μ), pas de grains ou agglomérats et une bonne permanence de couleur (lumière, résistance chimique). Par contre, dû à leur petite taille, ils sont relativement solubles en milieu aqueux mais résistants en milieu alcoolique (parfum etc...) .
- Quinacridone (rose, magenta) : L'objectif ici est de proposer un pigment organique en cosmétique et qui tient avec les parfums/cosmétiques, tout en permettant un revêtement transparent, sans trace de grains (pigments).
- Phtalocyanine de cuivre (bleu, vert) : Il s'agit d'un pigment organique autorisé en cosmétique qui tient avec les parfums/cosmétiques et qui permet de faire un revêtement transparent. Le Triton™ X100 de la société Thermo Fischer ajouté dans eau acidifiée + pigment + ultrason + butoxy + TEOS est un bon exemple de réalisation.
- Chinophtalon Quinophtalone : Par exemple avec la formule butoxy + PEG + pigment + ultrason 3 passages et 7 ml acide + TEOS puis mélange des deux, agitation 3 h.

Avantageusement, la solution selon un mode de réalisation de l'invention prévoit des additifs fonctionnels. Tous se dispersent bien car de petite taille, comme par exemple :

- Colloides argent antibactérie
- TiO2 blanc opacifiant
- CeO2 pour bloquer les UV
- Noir de carbone.

Comme on l'a vu, les cycles de chauffe peuvent être modifiés pour mieux préparer la surface. Les flacons peuvent ainsi être préchauffés pour permettre de mieux figer le SOL GEL sur la surface. De même une extraction préalable peut être mise en œuvre pour augmenter l'accroche et la résistance de la couche.

D'autre part un remplacement du TEOS ou ajout de trimethoxymethylsilane (TMS) permet une meilleure accroche et une meilleure tenue aux traitements thermiques et est avantageux pour améliorer encore la tenue et l'accroche de la silice de la couche et des pigments, en particulier en cas de frottement mécanique (tube plongeur de pompe de parfum par exemple).

Ici les préparations suivantes se révèlent particulièrement efficaces (l'abréviation Buto est pour le solvant Butoxyethanol) : 14 ml de Buto + 4 ml TEOS + 4 ml d'eau acidifiée (préparation 4 g d'acide citrique dissout dans 20 ml d'eau R1) + 1,2 g de pigment quinacridone + 0,05 g de PEG 1500 dissous dans 3 ml de Butoxyethanol mélangé comme ci-dessus et séché à 200°C pendant 1 h.

De plus, on constate que par l'ajout d'une combinaison de solvant pour maitriser le durcissement et l'accroche de la couche, on améliore la qualité esthétique du revêtement. En effet, en ajoutant de l'éthanol dans la formule avec pigments (à proportion 43 %) on permet l'évaporation progressive des solvants car la température d'évaporation de l'éthanol est 78°C, celle du butoxyéthanol 171°C.

Pendant la montée en température l'éthanol s'évapore en premier, puis le butoxyéthanol. Avec les deux solvants, les résultats de tenue et de dépôt sur flacons rectangulaires sont dès lors améliorés dans certains cas.

On note ainsi qu'en effectuant un séchage du revêtement à 150°C directement avec montée en température rapide (flacons placés dans four à 150°C directement), cela permet de figer le revêtement et d'augmenter la quantité de revêtement mise dans le flacon.

Enfin, il y a amélioration de l'accroche en cas d'ajout/remplacement du TEOS par du 1,2Bis (triethoxysilyl) éthane, silane dipodal et/ou de silane (octadecyltrimethoxtsilane). On observe en effet que ces silanes permettent une meilleure accroche sur les plastiques et les verres.

On a maintenant fait figurer ci-après plusieurs exemples de réalisation de l'invention qui permettent d'excellents résultats sur l'aspect obtenu (absence de craquelures, tenue au vieillissement excellente sans détérioration, ni apparition de zones inhomogènes) avec ajout de surfactant qui améliorent encore les très bon résultats obtenus avec l'exemple 1 (comprenant des traces de surfactant).

Exemple 1 : Flacon noir avec mélange de 2 pigments « liquides » (comprenant des traces de surfactant i.e. compris entre 0,02 g et 0,2 g PEG) ajoutés à 2 étapes différentes, contenant également des solvants évaporés avec le palier à basse température.

Essai 1 comprenant 5 g de pigment noir opaque + 9 ml de Butoxyethanol + 4 ml TEOS + 4ml acide (4 g+20 ml) et 6 g d'un deuxième pigment ajouté après 17 h de mélange.

Dans un bêcher, on introduit les 9 ml de Buto et les 4 ml de TEOS, on agite pendant 5 mn, puis on introduit l'eau acide, 1 mn après on mélange le pigment noir opaque, on agite pendant 12 h, puis on introduit 6 g du deuxième pigment suivi d'une deuxième agitation.

Deux pigments noir sont ainsi prévus dont un ajouté le matin pour laisser disperser le premier pigment et augmenter la teinte par un 2e pigment.

Le séchage se fait avec palier à 35°C (plage de 30 à 50°C) pour évacuer le solvant à bas point ébullition, puis à 150°C pendant 1h.

Exemple 2 : Pigments secs avec ajouts de surfactants

Essai 2 (14 ml Buto + 0,05 g PEG + 1,2 g Rose quinacridone + 4 ml TEOS + 4 ml acide (4 g+20 ml) NOTA : Buto = Butoxyethanol

Préparation :

Dans un flacon introduire 11 ml Buto + 4 ml TEOS, mélange 5 mn, puis ajout de 4 ml d'eau acide (4 g + 20 ml) puis 1,2 g de quinacridone, laisser agiter 15 mn dont 3 passages aux ultrasons à la suite de ces 15 mn introduire le mélange (3 ml butoxy + 0,05 PEG) puis 2 nouveaux passages aux ultrasons enfin une maturation du sol de 4 h avant dépôt. Séchage 200°C 5°C/min.

Une alternative au séchage progressif est de réaliser un premier palier d'une heure à 35°C avant de sécher pendant 1 heure à 150°C.

Lors d'un tel exemple, on obtient par exemple (extraction en autoclave à 121°C pendant 1 heure) un effet barrière exceptionnel avec une résistance hydrolytique de 1,4, à comparer à la résistance hydrolytique de 5,7 du verre nu sans revêtement.

De même on va obtenir une couche sol gel parfaitement neutre i.e. mesure des éléments chimiques par ICP après un mois en contact avec de l'Eau de Cologne à 45°C, suivants Ti, Sn, Pb, Cd, Ca, Al, K, Fe, Cr inférieur à 2 ppm.

Des résultats identiques sont obtenus pour une même formation et composition avec 3 g de pigment.

Dans ce cas, les composés organiques mesurés dans l'Eau de Cologne par GCMS sont identiques à ceux obtenus en contact direct avec le verre nu sans revêtement, c'est-à-dire sans modifications (ni de surfactant PEG, ni de Pigment).

Exemple 3 : Protection d'une sous-couche posée sur la surface du verre à l'intérieur, non compatible avec les produits contenus.

Essai 3 Durée 4 h (14 ml Buto 4ml Acide (4 g+20 ml) + 4 ml TEOS°+ 0,1 g PEG 150, séchage 150°C 5°C/mn - 1h. Dans un bécher dissoudre 0,1g de PEG 1500 dans 5ml de butoxyethanol sous agitation pendant 45 min. Dans un flacon introduire 9ml de butoxy, 4 ml d'acide (4 g ds 20) et enfin 4 ml de TEOS laisser sous agitation pendant 45 min. Après les 45 min d'agitation du sol y introduire les 5 ml de buto+ PEG 1500. séchage 150°C 5°C/mn - 1h.

Exemple 4 : Couche protection UV avec Cerium nanométrique.

Essai 4 Durée 5 h (14 ml Buto + 0,1g PEG + 0,55 g Cerium et 4 ml TEOS, 4 ml acide (4 g + 20 ml) et séchage 150°C, 5°C/m - 1h.

Dans un flacon introduire 7 ml buto + 4 ml TEOS agiter 5 mn introduire 4 ml d'acide dans le milieu réactif (4 g + 20 ml). En parallèle dans un bécher introduire 1,1 g PEG dans 7 ml de buto, après dissolution introduire les 0,55g de cérium. Lorsque le milieu réactif (Butoxy, TEOS et eau acidifiée) a été agité pendant 15 mn, introduire le mélange de surfactant (PEG)et additifs dans le milieu réactif puis 2 nouveaux passages aux ultrasons sont prévus avant mélange pendant 4h.

Exemple 5 : Mélange avec TEOS et TMS et pigments lourds.

Essai 5 (14 ml Buto + 0,2 g PEG + 200 μl Triton

+ 3,3 g Iriodin + 2 ml TEOS + 2 ml TMS 4 ml acide (4 g + 20 ml) séchage 150°C.

Dans un flacon introduire : 7 ml Buto + 2 ml TEOS + 2 ml TMS agiter 5 mn, introduire 4 ml d'acide dans le milieu réactif (4 g + 20 ml) puis les pigments sont introduits, agiter 15 mn dont 3 passages aux ultrasons. En parallèle dans un bécher introduire 0,1 g PEG dans 7 ml de Buto puis mélange des deux.

Pour apprécier l'extrême efficacité du surfactant on a fait figurer au microscope le revêtement interne d'un flacon avec surfactant et sans surfactant.

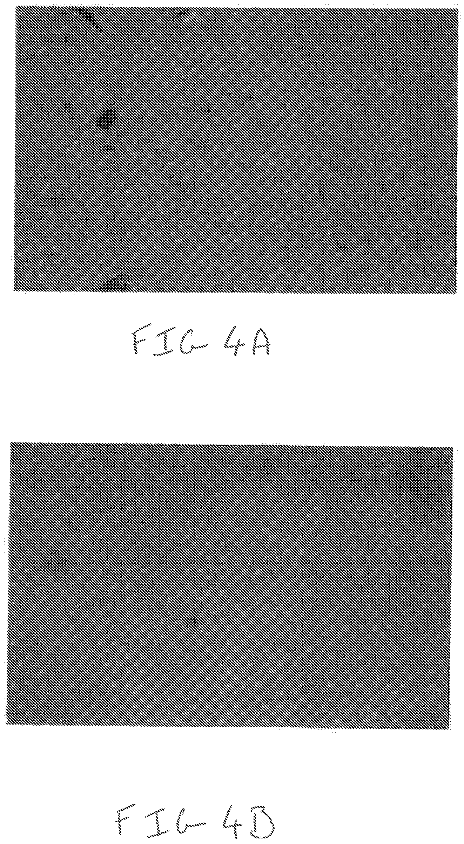

L'observation au microscope d'un flacon (cf. figure 4) préparé comme suit : 14 ml Butoxyéthanol/4 ml acide citrique et 4 ml TEOS et préparé comme décrit à l'exemple 2 (quand applicable), mais sans surfactant (pas de PEG), fait apparaitre des cloques.

L'ajout de 0,1 g de PEG 1500 (dissous dans 5 ml de butoxy avec agitation pendant 45 mn) ajouté dans le mélange ci-dessus préparé, permet de supprimer les cloques sur la surface comme sur la photo de la figure 4B.

La résistance hydrolytique obtenue pour les flacons est quant à elle excellente (voir ci-dessus i.e. RH = 1,4), ce qui traduit un très bon effet barrière.

Avec 0,02 g de PEG 1500 (5 fois moins), les résultats sont moins bons, mais toujours acceptables.

A noter que l'ajout d'un surfactant signifie l'introduction de composés organiques de petite taille, volatils et qu'on risque de retrouver dans le parfum.

Or l'expérience montre comme on l'a vu ci-avant qu'il n'en est rien.

On va maintenant décrire de façon non limitative un mode de réalisation d'un dispositif permettant de mettre en œuvre l'invention en référence à la figure 3.

Dans la suite on utilisera les mêmes numéros de référence pour désigner des éléments identiques ou similaires.

La figure 3 montre un dispositif 22 de revêtement 19 d'au moins une portion de la surface interne 17 d'un récipient 16, selon le mode de réalisation de l'invention plus particulièrement décrit ici.

Le récipient 16 est par exemple un flacon parallélépipédique en verre allongé avec un goulot ou col C cylindrique autour d'un axe Oz. Il comporte donc à l'une de ses extrémités (extrémité haute), une ouverture 10 en goulot. L'ouverture du goulot comprend un col C de diamètre plus petit que celui du récipient au flacon.

Le récipient forme ainsi sensiblement une enceinte.

Le dispositif comprend un support S du récipient, comprenant par exemple une mâchoire M de rétention en forme de coupelle ou de U dont les branches L enserrent le culot, c'est à dire le fond du récipient fixé par des vis latérales (non représentées).

Des moyens 23 de mise en rotation du récipient autour de son axe Oz à une vitesse V déterminée sont prévus connus en eux-mêmes. La vitesse V peut être constante ou variable et régulée. Plus précisément les moyens comprennent par exemple une barre rotative d'entrainement du support s'étendant suivant l'axe Oz et un moteur d'entrainement de façon connue en elle-même.

Du côté du goulot du récipient 16 sont montés sur un bâti B, en traits mixtes sur la figure, des moyens 24 d'insertion/extraction (flèche25) d'un outil ou buse 26 d'aspersion à l'intérieur du récipient.

La buse 26 comprend une tige ou tube 27 longitudinal relié à son extrémité 28 aux moyens 24 d'insertion comprenant un actionneur 23 de déplacement longitudinal tel qu'un vérin.

L'action du vérin, solidaire de la buse 26 translate celle-ci d'une position initiale extérieure au récipient 13 à une position de fonctionnement interne au récipient selon l'axe Oz.

Il permet ainsi une descente progressive continue ou par palier de l'outil d'application de la solution (gel en formation) de revêtement sur la surface interne du récipient.

Une succession de points ou de lignes avec des temps et des vitesses ajustées pour épouser la forme du flacon peuvent être employés en complément et/ou substitution des mouvements de rotation.

La buse engendre une vaporisation 30 selon un angle solide $\alpha$ de dispersion déterminé dépendant de la pression et de la vitesse d'éjection commandée de façon connue en elle-même.

Le tube est relié, à son extrémité opposée à un système 31 de distribution d'une solution liquide de revêtement à asperger comprenant des moyens 32 d'alimentation en solution 33 liquide ou sensiblement liquide pour permettre l'aspersion, à un débit D déterminé.

Le système 31 comprend ainsi un réservoir 34 de stockage dudit liquide et des moyens 35 de circulation du liquide (pompe doseuse) agencés pour réguler le débit D du liquide via un calculateur 36 et commande également les autres actionneurs mis en œuvre dans le dispositif.

Le réservoir comprend dans son fond un moyen mélangeur par exemple un agitateur (non représenté).

Le gel de revêtement est le matériau liquide durcissable de revêtement obtenu par le procédé SOL-GEL ci-dessus décrit.

Le dispositif comprend également des moyens 37 de chauffe du récipient 13 connus en eux-mêmes permettant l'élévation de la température d'une partie de la surface interne du récipient jusqu'à un seuil de température déterminé.

Plus précisément l'échauffement de la surface interne s'effectue par exemple par radiation directe à partir de résistances chauffantes 38 disposées à l'extérieur du récipient ou par diffusion autour de la paroi du récipient disposée en contact par exemple avec une moufle de chauffage (non représentée).

Dans un mode de réalisation le récipient et la résistance sont sensiblement confinés dans une même enceinte de sorte à former un four pour un échauffement homogène du récipient.

Le dispositif comprend également un ordinateur ou automate 39 de commande numérique comprenant le calculateur 36.

Ceux-ci sont connectés via un bus 40 de données et de façon connue en elle-même, aux actionneurs du dispositif, à savoir à ceux de la mâchoire de rétention du récipient, c'est à dire du moteur d'actionnement en rotation, à ceux des moyens 24 d'insertion de la buse 26 dans le récipient (vérin), l'agitateur, ainsi qu'à ceux des moyens 35 de circulation/alimentation en liquide (pompe, vanne, buse) et des moyens 37 de chauffe (résistances électriques).

Le calculateur 36 est agencé pour calculer à partir des différentes consignes imposées, une loi de commande de chacun des actionneurs de façon connue en elle-même.

Comme il va de soi et comme il résulte également de ce qui précède, la présente invention n'est pas limitée aux modes de réalisation plus particulièrement décrits. Elle en embrasse au contraire toutes les variantes et notamment celles où le dispositif mettant en œuvre le procédé est différent.

L'application peut ainsi et par exemple se faire par lettrage ou tampon.

Le principe ici est d'utiliser un tampon en forme de lettre ou de motif en caoutchouc (suffisamment petit pour être introduit dans le col du flacon) nappé/trempé de SOL GEL coloré puis introduit au bout d'une tige (robotisée/articulée dans un second temps) dans le flacon avant d'être appliqué sur la surface du verre. Le tampon est ensuite ressorti du flacon. Le SOL GEL est ensuite séché normalement comme décrit ci-avant.

L'application d'une couche réactive aux UV sur la surface interne puis exposition peut également être le procédé utilisé. On utilise alors une gélatine avec dichromate d'ammonium ou diazidostilbène par exemple comme additif supplémentaire en ajoutant des pigments réactifs dans le SOL GEL.

Les pigments réactifs sont ajoutés directement dans le SOL GEL, un négatif est collé sur la surface extérieure du flacon puis une lumière UV forte est appliquée au travers du négatif pour révéler l'image, l'excédent est lavé avant séchage.

On peut également appliquer la couche réactive comme précédemment, puis on applique le SOL GEL transparent (ou coloré) en surface interne de protection pour le produit contenu.

Un autre mode de réalisation utilise des aiguilles d'impression.

Ici le principe est le suivant :
On introduit une des valves d'impression en forme d'aiguille par le col. Le contrôle de la valve permet de faire des gouttes fines proches de la surface intérieure (type jet d'encre), donc dessiner un motif est possible en contrôlant le déplacement relatif de l'aiguille par rapport à la surface ainsi que l'éjection de la goutte. Ces aiguilles sont à mémoire de forme ; elles peuvent être incurvées pour se rapprocher des surfaces internes.

Il est également possible de réaliser des aiguilles cintrées pouvant éjecter des gouttes dans une direction souhaitée.

Ces valves (LeeCo) ont un diamètre proche de 6 mm pouvant être entièrement introduites dans la plupart des flacons. Une fois introduites, ces valves peuvent être inclinées (par exemple avec un robot) afin de pouvoir projeter plus précisément dans l'axe des buses.

Avec l'invention, et en utilisant un système de pulvérisation ainsi qu'un programme spécifique adéquat, tout en abaissant suffisamment la pression de l'air de pulvérisation, le système peut ainsi éjecter des gouttelettes de taille plus importante qu'en fonctionnement normal. Cette manipulation permet de réaliser un effet « moucheté » jamais obtenu à ce jour.

L'invention ne se limite pas aux modes de réalisation plus particulièrement décrits.

Elle en couvre toutes les variantes et notamment celles où plusieurs précurseurs, par exemple deux ou trois, différents ou non du TEOS, sont utilisées dans la réaction.

## Revendications

1. Procédé de fabrication d'une couche neutre et barrière de matrice minérale (19) de revêtement de la face interne (17) d'un récipient (16) propre à contenir des produits biocompatibles avec l'homme et/ou l'animal, dans lequel

   - on forme (1, 2, 4, 5, 6) une solution contenant au moins un solvant, de l'eau, au moins un précurseur moléculaire complexant de la famille des alkoxysilanes, au moins un surfactant, au moins un pigment et/ou colorant et de l'acide citrique comme catalyseur,
   - on applique (12) la solution ainsi complexée de façon uniforme sur au moins une partie de la face interne du récipient, la solution étant en cours d'hydrolyse et condensation, et
   - on sèche (13) la solution ainsi appliquée à une température déterminée de séchage pour former sur ladite face interne ladite couche barrière opaque, translucide et/ou formant un motif déterminé, avant évacuation, stockage éventuel, et remplissage dudit récipient par le produit.

2. Procédé selon la revendication 1, **caractérisé en ce que** le récipient étant en verre, la température déterminée de séchage est comprise entre 140°C et 220°C.

3. Procédé selon l'une quelconque des revendications précédentes, **caractérisé en ce qu'**on sèche la solution ainsi appliquée en augmentant la température à une vitesse comprise entre 3°C.min$^{-1}$ et 10°C.min$^{-1}$ jusqu'à la température déterminée de séchage.

**4.** Procédé selon l'une quelconque des revendications précédentes, **caractérisé en ce qu'**on préchauffe le récipient à une deuxième température inférieure à la température déterminée de séchage avant application de la solution.

**5.** Procédé selon la revendication 4, **caractérisé en ce que** la deuxième température est comprise entre 70°C et 90°C.

**6.** Procédé selon l'une quelconque des revendications 1 à 3, **caractérisé en ce que** le séchage à une température déterminée de séchage comprend une première étape de pré-séchage à une troisième température inférieure à la température de séchage pendant un temps déterminé, et une seconde étape de séchage à la température déterminée.

**7.** Procédé selon la revendication 6, **caractérisé en ce que** la troisième température de séchage est comprise entre 20°C et 50°C.

**8.** Procédé selon l'une quelconque des revendications précédentes, **caractérisé en ce que** le précurseur moléculaire est pris parmi l'orthosilicate de tétraéthyle et le trimethoxymethylsilane.

**9.** Procédé selon l'une quelconque des revendications précédentes, **caractérisé en ce que** le solvant comprend du butoxyethanol et/ou de l'éthanol.

**10.** Procédé selon l'une quelconque des revendications précédentes, **caractérisé en ce qu'**on prend le pigment parmi les oxydes métalliques comprenant du cobalt et du titane, les oxydes métalliques comprenant du cuivre et du chrome, les pigments photochromes et/ou on prend le colorant parmi les familles de composés comprenant seul ou en combinaison, les quinacridone, les Phtalocyanine, les Chinophtalon et/ou les composés formés d'une couche d'aluminium et/ou ses oxydes, ladite couche étant elle-même enrobée d'une couche d'oxyde de silice.

**11.** Procédé selon l'une quelconque des revendications précédentes, **caractérisé en ce qu'**on ajoute à la solution avant application sur la face interne du récipient, des composés pris parmi les familles comprenant des particules de nano-argent colloïdales et/ou les oxydes de titane et/ou les oxydes de cérium et/ou du noir de carbone et/ou du polydiméthylsiloxane.

**12.** Procédé selon l'une quelconque des revendications précédentes, **caractérisé en ce qu'**on forme la solution par mélange du solvant et du pigment et/ou colorant, on expose le mélange obtenu à une onde mécanique ultrasonore pendant un temps déterminé avant introduction dans le mélange du précurseur moléculaire.

**13.** Procédé selon l'une quelconque des revendications précédentes, **caractérisé en ce qu'**avant application de la solution sur la face interne du récipient on extrait préalablement de ladite face interne les matières extractibles, par traitement en étuve en atmosphère humide contenant des molécules de chlorure de sodium et/ou de gluconate de calcium dissout dans de l'eau dans des proportions n'excédant pas celles permettant une dissolution complète desdites molécules.

**14.** Procédé selon l'une quelconque des revendications précédentes, **caractérisé en ce que** le surfactant est pris parmi le cetrimonium bromide, les surfactants anioniques, le laurylsulfate de sodium et/ou on ajoute du silicone.

**15.** Procédé selon la revendication 14, **caractérisé en ce que** le surfactant est pris parmi les polyéthylènes glycol de masse molaire comprise entre 1000 et 2000 g.mol-1, le polyéthylène glycol tert-octylphenyl ether , le polyethylène glycol, le polyethylene glycol p-(1,1,3,3-tetramethylbutyl)-phenyl ether et/ou le le silicone est du polydiméthylsiloxane.

**16.** Récipient (16) en verre propre à contenir des produits biocompatibles avec l'homme et/ou l'animal comprenant une surface interne (17), **caractérisée en ce que** ladite surface interne (17) est recouverte sur au moins une partie d'une couche neutre et barrière de matrice minérale (19) de revêtement solidifiée obtenue par le procédé selon l'une quelconque des revendications précédentes, ladite couche (19) de revêtement formant une matrice agencée pour réaliser une barrière physico-chimique.

**Patentansprüche**

**1.** Verfahren zur Herstellung einer mineralischen neutralen Matrix-Sperrbeschichtung (19) für die Innenfläche (17) eines Behälters (16), der geeignet ist, für Mensch und/oder Tier biokompatible Produkte zu enthalten, bei dem:

- eine Lösung gebildet wird (1, 2, 4, 5, 6), die mindestens ein Lösungsmittel, Wasser, mindestens eine komplexbildende molekulare Vorstufe aus der Gruppe der Alkoxysilane, mindestens ein oberflächenaktives Mittel, mindestens ein Pigment und/oder einen Farbstoff und Zitronensäure als Katalysator enthält,
- die derart komplexierte Lösung gleichmäßig auf mindestens einen Teil der Innenfläche des Behälters aufgetragen wird (12), wobei die Lösung in Hydrolyse und Kondensation befindlich ist, und
- die derart aufgetragene Lösung bei einer bestimmten Trocknungstemperatur getrocknet wird (13), um auf der Innenfläche die undurchsichtige, durchscheinende und/oder ein bestimmtes Muster bildende Sperrbeschichtung vor Abtransport, eventueller Lagerung und Befüllung des Behälters mit dem Produkt zu bilden.

2. Verfahren nach Anspruch 1,
**dadurch gekennzeichnet,**
**dass** bei einem Behälter aus Glas die bestimmte Trocknungstemperatur zwischen 140° C und 220° C liegt.

3. Verfahren nach einem der vorhergehenden Ansprüche,
**dadurch gekennzeichnet,**
**dass** die derart aufgetragene Lösung bei einer Geschwindigkeit zwischen 3 °C.min$^{-1}$ und 10 °C.min$^{-1}$ bis zur bestimmten Trocknungstemperatur getrocknet wird.

4. Verfahren nach einem der vorhergehenden Ansprüche,
**dadurch gekennzeichnet,**
**dass** der Behälter bei einer zweiten Temperatur vorgeheizt wird, die niedriger ist als die bestimmte Trocknungstemperatur vor dem Auftragen der Lösung.

5. Verfahren nach Anspruch 4,
**dadurch gekennzeichnet,**
**dass** die zweite Temperatur zwischen 70° und 90 °C liegt.

6. Verfahren nach einem der Ansprüche 1 bis 3, **dadurch gekennzeichnet, dass** das Trocknen bei einer bestimmten Trocknungstemperatur einen ersten Schritt des Vortrocknens bei einer dritten Temperatur umfasst, die niedriger ist als die Temperatur der Trocknung für eine bestimmte Dauer, und einen zweiten Schritt der Trocknung bei der bestimmten Temperatur.

7. Verfahren nach Anspruch 6,
**dadurch gekennzeichnet,**
**dass** die dritte Trocknungstemperatur zwischen 20 ° und 50 °C liegt.

8. Verfahren nach einem der vorhergehenden Ansprüche,
**dadurch gekennzeichnet,**
**dass** die molekulare Vorstufe unter Tetraethylorthosilicat und Trimethoxymethylsilan ausgewählt ist.

9. Verfahren nach einem der vorhergehenden Ansprüche,

**dadurch gekennzeichnet,**
**dass** das Lösungsmittel Butoxyethanol und/oder Ethanol enthält.

10. Verfahren nach einem der vorhergehenden Ansprüche,
**dadurch gekennzeichnet,**
**dass** das Pigment unter den Metalloxiden umfassend Cobalt und Titan, den Metalloxiden umfassend Kupfer und Chrom, den photochromen Pigmenten und/oder der Farbstoff aus den Gruppen von Verbindungen umfassend - alleine oder in Kombination - die Chinacridone, die Phthalocyanine, die Chinophtalone und/oder die Verbindungen, die durch eine Schicht aus Aluminium und/oder dessen Oxide gebildet sind, wobei die Schicht selbst mit einer Siliciumoxidschicht umhüllt ist, ausgewählt werden.

11. Verfahren nach einem der vorhergehenden Ansprüche,
**dadurch gekennzeichnet,**
**dass** der Lösung vor dem Auftragen auf die Innenfläche des Behälters Verbindungen zugesetzt werden, die aus den Gruppen ausgewählt werden, welche kolloidale Nanosilberpartikel und/oder die Titanoxide und/oder die Ceroxide und/oder Ruß und/oder Polydimethylsiloxan enthalten.

12. Verfahren nach einem der vorhergehenden Ansprüche,
**dadurch gekennzeichnet,**
**dass** die Lösung dadurch gebildet wird, dass Lösungsmittel und Pigment und/oder Farbstoff vermengt werden, das erzielte Gemisch einer mechanischen Ultraschallwelle für eine bestimmte Zeitdauer ausgesetzt wird vor Eintragen der molekularen Vorstufe in das Gemisch.

13. Verfahren nach einem der vorhergehenden Ansprüche,
**dadurch gekennzeichnet,**
**dass** vor dem Auftragen der Lösung auf die Innenfläche des Behälters zuvor von der Innenfläche die extrahierbaren Stoffe durch eine Behandlung in einer Wärmekammer mit feuchter Atmosphäre mit Natriumchloridmolekülen und/oder Calciumgluconatmolekülen extrahiert werden, welche in Wasser aufgelöst ist in Verhältnissen, die diejenigen nicht übersteigen, die ein vollständiges Auflösen der genannten Moleküle ermöglichen.

14. Verfahren nach einem der vorhergehenden Ansprüche,
**dadurch gekennzeichnet,**
**dass** das oberflächenaktive Mittel unter Cetrimoniumbromid, den anionischen oberflächenaktiven Mitteln, Natriumlaurylsulfat ausgewählt wird und/oder Silikon zugesetzt wird.

**15.** Verfahren nach Anspruch 14,
**dadurch gekennzeichnet,**
**dass** das oberflächenaktive Mittel unter den Polyethylen Glykolen mit einer molaren Masse zwischen 1000 und 2000 g.mol$^{-1}$, Polyethylenglykol-Tertoctylphenyl-Ether, Polyethylenglycol, Polyethyleneglycol p-(1,1,3,3-Tetramethylbutyl)-Phenyl-Ether ausgewählt ist und/oder das Silikon Polydimethylsiloxan ist.

**16.** Behälter(16) aus Glas, der geeignet ist, für Mensch und/oder Tier biokompatible Produkte zu enthalten, mit einer Innenfläche (17),
**dadurch gekennzeichnet,**
**dass** die Innenfläche (17) mindestens teilweise mit einer verfestigten mineralischen neutralen Matrix-Sperrbeschichtung (19) überzogen ist, die mit dem Verfahren nach einem beliebigen der vorhergehenden Ansprüche hergestellt wurde, wobei die Beschichtung (19) eine Matrix bildet, die angeordnet ist, um eine physikalisch-chemische Sperre zu bilden.

**Claims**

**1.** Method for the manufacture of a neutral barrier layer of mineral matrix (19) for coating the inner surface (17) of a container (16) suitable for containing products biocompatible with humans and/or animals, in which

- a solution containing at least one solvent, water, at least one complexing molecular precursor of the family of alkoxysilanes, at least one surfactant, at least one pigment and/or dye and citric acid as a catalyst, is formed (1, 2, 4, 5, 6),
- the solution complexed in this way is uniformly applied (12) to at least a part of the inner surface of the container, the solution being in the process of hydrolysis and condensation, and
- the solution applied in this way is dried (13) to a given drying temperature in order to form on said inner surface said barrier layer which is opaque, translucent and/or forms a given motif, before drainage, storage, if any, and filling of said container with the product.

**2.** Method according to claim 1, **characterised in that**, as the container is made of glass, the given drying temperature is between 140°C and 220°C.

**3.** Method according to any one of the preceding claims, **characterised in that** the solution applied in this way is dried by increasing the temperature at a rate of between 3°C.min$^{-1}$ and 10°C.min$^{-1}$ to the given drying temperature.

**4.** Method according to any one of the preceding claims, **characterised in that** the container is preheated to a second temperature lower than the given drying temperature before application of the solution.

**5.** Method according to claim 4, **characterised in that** the second temperature is between 70°C and 90°C.

**6.** Method according to any one of claims 1 to 3, **characterised in that** drying to a given drying temperature comprises a first step of predrying to a third temperature lower than the drying temperature for a given length of time, and a second step of drying to the given temperature.

**7.** Method according to claim 6, **characterised in that** the third drying temperature is between 20°C and 50°C.

**8.** Method according to any one of the preceding claims, **characterised in that** the molecular precursor is selected from among tetraethyl orthosilicate and trimethoxymethylsilane.

**9.** Method according to any one of the preceding claims, **characterised in that** the solvent comprises butoxyethanol and/or ethanol.

**10.** Method according to any one of the preceding claims, **characterised in that** the pigment is selected from among metal oxides including cobalt and titanium, metal oxides including copper and chromium, photochromic pigments and/or the dye is selected from among families of compounds including, on its own or in combination, quinacridone, phthalocyanine, quinophthalone and/or compounds formed of a layer of aluminium and/or oxides thereof, said layer being itself coated with a layer of silicon dioxide.

**11.** Method according to any one of the preceding claims, **characterised in that** compounds selected from among families including colloidal nanosilver particles and/or titanium oxides and/or cerium oxides and/or carbon black and/or polydimethylsiloxane, are added to the solution before application to the inner surface of the container.

**12.** Method according to any one of the preceding claims, **characterised in that** the solution is formed by mixing the solvent and the pigment and/or dye, subjecting the mixture obtained to an ultrasound mechanical wave for a given length of time before introduction of the molecular precursor into the mixture.

**13.** Method according to any one of the preceding claims, **characterised in that**, before application of the solution to the inner surface of the container, extractable materials are first extracted from the inner surface by treatment in a kiln in a humid atmosphere containing molecules of sodium chloride and/or calcium gluconate dissolved in water in proportions not exceeding those which allow complete dissolution of said molecules.

14. Method according to any one of the preceding claims, **characterised in that** the surfactant is selected from among cetrimonium bromide, anionic surfactants, sodium lauryl sulphate and/or silicone is added.

15. Method according to claim 14, **characterised in that** the surfactant is selected from among polyethylene glycols having a molar mass of between 1000 and 2000 $g.mol^{-1}$, polyethylene glycol tert-octylphenyl ether, polyethylene glycol, polyethylene glycol p-(1,1,3,3-tetramethylbutyl)-phenyl ether and/or the silicone is polydimethylsiloxane.

16. Container (16) made of glass suitable for containing products biocompatible with humans and/or animals, comprising an inner surface (17), **characterised in that** said inner surface (17) is covered on at least a part with a neutral barrier layer of mineral matrix (19) of solidified coating obtained by the method according to any one of the preceding claims, said coating layer (19) forming a matrix arranged to produce a physicochemical barrier.

FIG.1

FIG.2

FIG.3

FIG 4A

FIG 4B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010112792 A

- FR 2935594